# EUROPEAN PATENT APPLICATION

(11) **EP 2 723 135 A1**
(43) Date of publication of application: **23.04.2014**
(21) Application number: 12382408.8
(22) Date of filing: 19.10.2012
(51) Int. Cl.: H04W 72/12

(54) **A method and a system for sharing wireless broadband connection between devices**

(71) Applicant: Telefonica S.A., 28013 Madrid (ES)
(72) Inventor: Grunenberger, Yan, 28013 Madrid (ES); Papagiannaki, M. Konstantina, 28013 Madrid (ES)
(74) Representative: Gonzalez-Alberto Rodriguez, Natalia

(57) **Abstract**

The method comprising a wireless device with a tethering function allowing connecting at least one wired broadband device and sharing their wireless broadband connection through the use of a connecting interface. In the method said tethering function comprises sharing said wireless broadband connection through aggregating a bandwidth of one wired broadband device to at least one of said wireless broadband connection of said wireless device.

The system of the invention is adapted to implement the method of the invention.

## Description

### Field of the art

The present invention generally relates to the field of network communications, and more particularly, to a method and a system for sharing wireless broadband connection between devices.

### Prior State of the Art

Sparsely populated rural areas are likely to have restricted wired broadband performance to households due to long distances to DSLAMs or cable head ends. In addition, due to their sparse population are by default not cost effective areas for the expansion of wired telecommunication infrastructure (especially to each home). At the same time such areas tend to be covered by 3G and soon 4G towers that could provide significant uplink, downlink performance (if within the cell coverage area).

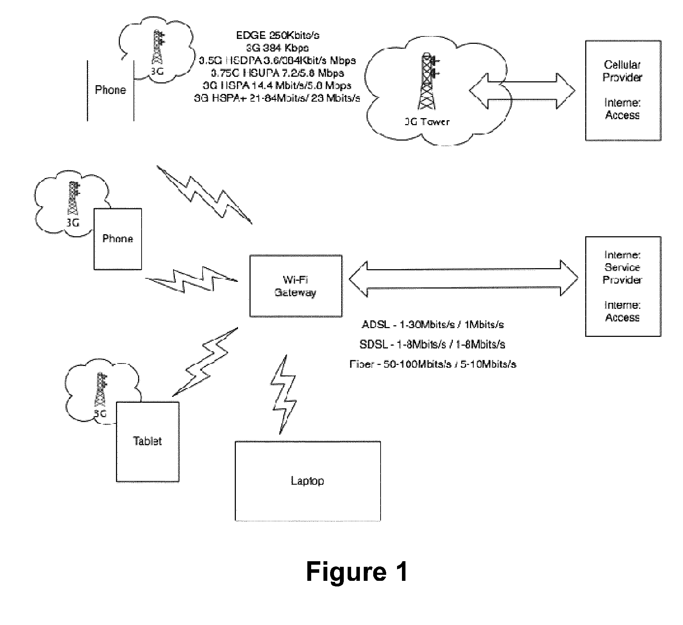

Fig. 1 shows an example of the current situation of a household connectivity options.

An internet service provider delivers WAN (Wide Area Network) connectivity to a traditional wired connection using ADSL, SDSL, (Cable TODO check rates) or fiber optics through the use of a gateway that redistributes the connectivity through a WiFi LAN (Local Area Network) interface inside the home. In the home, different types of devices are present; device with a dual connectivity: WAN (through cellular 3G embedded modem) and LAN (WiFi, Bluetooth, Ethernet over USB) such as tablets or smartphones. Others devices are the one with a single connectivity with a LAN interface (WiFi, Ethernet) like the typical laptops and PCs.

A known (and already present on the market technique) called tethering enables mobile devices to share their wireless cellular connection to others devices through the mean of another interface (USB cable, bluetooth or WiFi connection); Each device hardware and software is considered capable of tethering and authorized by the wireless provider to do so. Using tethering, each device can share its WAN connectivity through the LAN connectivity. This invention intends to exploit this through aggregation.

There are some related patent applications trying to perform such operation. For instance US 20120077483 *Enabling Interface Aggregation of Mobile Broadband Network Interfaces* which discloses several two interfaces placed on a single device; typically these network interfaces have WiFi and a 3G capability.

Another patent application is WO 2012006595 Transparent Proxy Architecture for Multi-Path Data Connections describing aggregation with cooperation with the network. A middle box aggregates bandwidths that are put on different links depending on several criteria, e.g. bandwidth, congestion and/or latency. Again, the aggregation is limited to single devices and only managed inside the network.

Patent US 2008253282 *System And Method For Transmitting A Data Flow Via Bundled Network Access Links As Well As An Auxiliary Transmitter And Receiver Device And Transmission And Receiving Methods Therefore.* This patent discloses a system and a method for transferring a data flow via bundled network access links as well as to an auxiliary transmitter device and to an auxiliary receiver device and to a transmission and receiving method therefore. The referred patent uses a middle box, accessible from different paths for merging several contributions before sending the final content.

In the present invention, however, no bundling of any access link occurs.

The present invention, proposes the augmentation of a primary wired broadband connection with a number of mobile broadband connections (that are increasing in number within homes -smartphones, tablets, consumer electronics). So, it increases the use of bandwidth in sparsely populated areas, e.g. rural areas, and it better used the available bandwidth in a home area.

### Summary of the Invention

Principles of the invention, in illustrative embodiments thereof, advantageously provide a method for sharing wireless broadband connection between devices.

The method, as commonly in the field, comprising a wireless device with a tethering function allowing connection with at least one wired broadband device and sharing their wireless broadband connection through the use of a connecting interface.

In the method, in a characteristic manner the tethering function comprises sharing said wireless broadband connection through aggregating a bandwidth of one wired broadband device to at least one of said wireless broadband connection of said wireless device.

In an embodiment, the bandwidth aggregation can be performed by using a middle box capable of providing multi-path support or instead by using multi-path capabilities on internet protocols.

The wired broadband device is for example an 802.11 gateway device and the wireless device is at least one of a mobile phone, a laptop, a computer, and/or a tablet computer, among other devices with computing capacities.

In another embodiment, the wireless device is attached or docked to the 802.11 gateway device and performs said wireless broadband connection sharing through said connecting interface by using a wired connectivity, for instance via a USB connection.

In another embodiment, the wireless broadband connection sharing of the wireless device is done by using a virtualization equipment, said virtualization equipment being connected to said 802.11 gateway device.

The wireless device and said wired broadband device are located within a home area so that said bandwidth aggregation takes place inside said home area.

In yet another embodiment, several of said wireless devices can be connected to the wired broadband device.

In case the bandwidth aggregation is performed using a middle box, loopholes in different protocols can be exploited by downloading a plurality of chunks of a single file in a video streaming protocol or even by downloading a part of the content from a content server by using headers having specific content-ranges.

Further principles of the invention, in illustrative embodiments thereof, advantageously provide a system for sharing wireless broadband connection between devices. The system comprising a wireless device having a tethering function and being adapted to allow connection with at least one wired broadband device and sharing their wireless broadband connection through the use of a connecting interface.

In a characteristic manner in the system said tethering function comprises sharing said wireless broadband connection through aggregating a bandwidth of one wired broadband device to at least one of said wireless broadband connection of said wireless device.

In an embodiment, the wired broadband device is an 802.11 gateway device, having a bus with a plurality of data connections, and said wireless device is connected to said bus with said plurality of data connections.

The system of the invention is adapted to implement the method of the invention.

### Brief Description of the Drawings

The previous and other advantages and features will be more fully understood from the following detailed description of embodiments, with reference to the attached, which must be considered in an illustrative and non-limiting manner, in which:
Figure 1 is an illustration showing the typical household connectivity options.
Figure 2 is an illustration of the procedure for performing the aggregation through a gateway, so aggregation is enabled through docking capabilities of the gateway.
Figure 3 is an illustration of the procedure of performing the aggregation through WiFi, so enabling aggregation through WiFi virtualization.
Figure 4 is an illustration of the procedure of performing the aggregation through WiFi, so enabling aggregation through regular WiFi and applications.
Figure 5 is an illustration showing the multi-paths support problem with current Internet underlying infrastructure.
Figure 6 is the proposed solution for the multi-paths problem according to an embodiment.
Figure 7 is an illustration showing the HTTP Live stream protocol loophole used for multi-path aggregation.

### Detailed Description of Several Embodiments

Enabling aggregation:

The aggregation could be enabled through different techniques.

Aggregation through the gateway: This technique exploits the fact the centralized position of the gateway. The gateway is usually fitted with some USB connectors for media streaming, printer sharing, but this connection could be generalized to bus providing power and data connection. The invention proposes to use this bus connection as a docking facility for the device of the home, so that:
- The devices get recharged through the power line of the power lines, a typical process that every smartphone user does every night.
- The devices share their cellular connection with the gateway through the data lines, where lies the novelty.

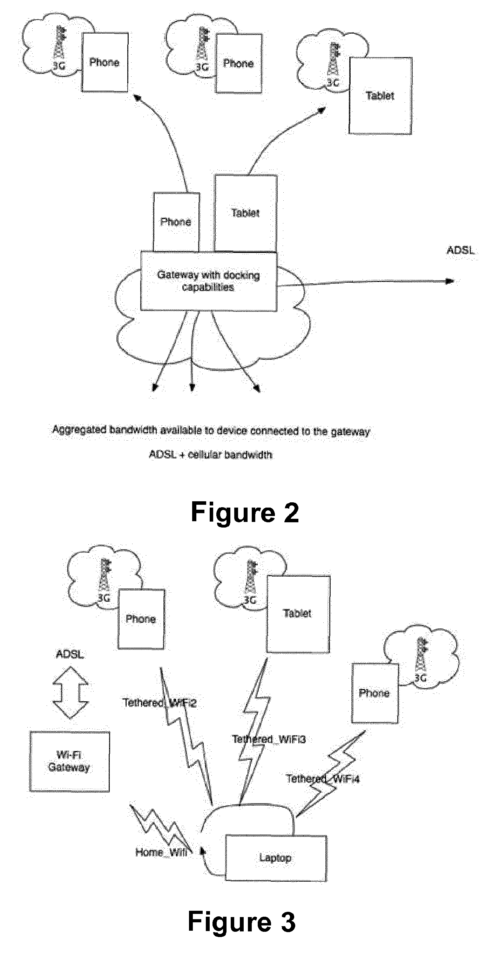

Figure 2 shows an embodiment of the overall procedure. Multiple devices are connected and recharging, while sharing their internet connection through wired tethering via their USB connection.

Aggregation through WiFi: This technique involves relying on the WiFi as a common medium to aggregate the bandwidth. The invention distinguishes a case where it benefits from WiFi virtualization techniques, and the case it has to manage with regular WiFi.

### ● Using WiFi virtualization:

The invention reuses the same approach as the one presented with the ClubWiFi technology developed in TID, a *"Method and single radio station for managing station throughputs from a wireless multiple access points backhaul"* and *"WIFI backhaul aggregation for all".*

In that case, the different access points are replaced by mobiles phones sharing their internet connection through tethering. A device equipped with WiFi virtualization could connect simultaneously to multiple mobile devices at the same time as well as the home WiFi network, resulting in enabling aggregation of the home backhaul bandwidth and the remaining 3G bandwidth given by each phone of the house.

As presented on figure 3, a virtualization-enabled client can cycled through the different connections using a single WiFi card, enabling aggregation by switching from one network to another.

### ● Using standard WiFi:

In the case of standard WiFi, the invention will work in a degraded mode, as it will use the WiFi of the home network as a way to aggregate bandwidth. In that case, all devices (laptop, mobiles devices) are connected as simple clients of the WiFi network. Each mobile devices run a small application that:
- listen incoming connection from the WiFi network
- route all the traffic coming from this socket to the 3G network

Aggregation is then enabled at any client capable of running a program or a library that:
- discover all the mobile devices sharing their connection through the home WiFi network
- dispatch the traffic between the gateway and the different mobile devices sharing the connection on the WiFi network.

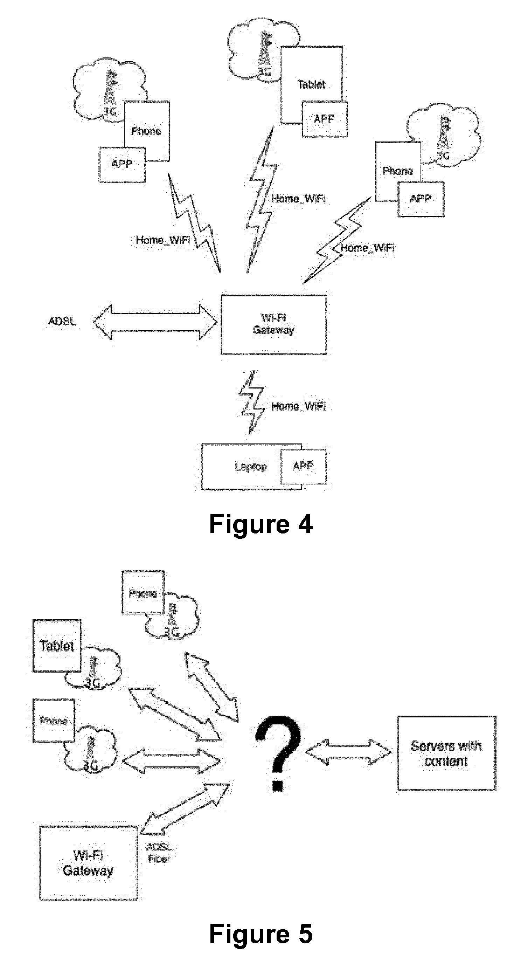

Figure 4 shows in an embodiment this situation. A client device (laptop) is connected and running an application that will connect to all the mobile devices and will enable aggregation.

In that case the aggregation is done in a degraded way, as the same WiFi network bandwidth is shared between the multiple devices competing for the very same access. Nevertheless, with the increasing modulation of the WiFi (reaching 450Mbps) the invention expects the available bandwidth to be larger than the offered bandwidth by each phone (3G speeds).

### Performing aggregation:

Previous section has presented the different techniques to enable aggregation. In this section, will be focus on how to perform this aggregation so that applications can benefit from it.

The problem is stated on figure 5. Most content server is relying on TCP/IP paradigms that do not support multi path schemes out of the box. Therefore, the invention try to address here the problem of managing the new multiple paths coming from the aggregation technology, with the reality of the current Internet content servers, by proposing two solutions.

### ● With network cooperation:

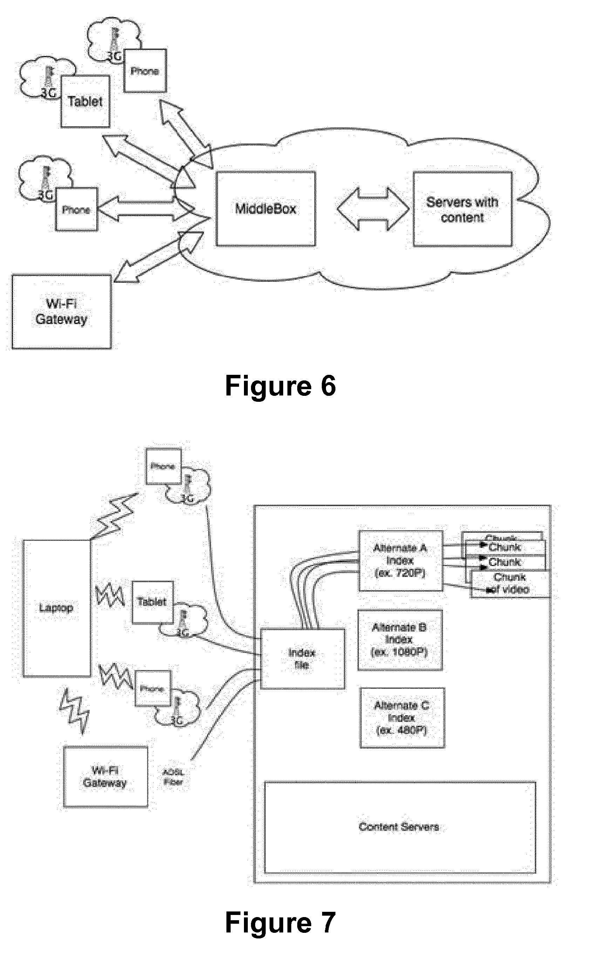

In this solution it is assumed that the network will provide a cooperative support to the aggregation through multi path contributions. Figure 6 shows in an embodiment the proposed solution where a middle box, accessible from the different paths is merging the different contributions before contacting the final content. A similar approach is taken from the patent US 2008253282, except there is no bundling of access links, but aggregation of connections through multiple devices that have a single access link each.

### ● In a standalone mode:

In this solution it is assumed there are no more middle boxes. Therefore, the invention exploits loopholes in different protocols in use on the Internet to exploit the multi-path capabilities.
● Video streaming: a popular video streaming protocol, HTTP Live streaming offer a playlist of chunks of the original file, with different alternate streams of different bitrates. Based on that knowledge, different path can download different chunk of the same file. Figure 7 describes such an operation.
● A more generic approach can be applied with large content hosted on HTTP 1.1 compliant servers. In that case, each path could download a part of the content by using the specific Content-Range: headers.

In an embodiment, the feasibility of such a scheme with the real cellular network in production use was explored. Up to 10 phones in 5 different locations were used. Table 1 illustrates the location.

**Table 1: Different locations used for 3GOL active experiments and comparison with the DSL and cellular capacity.**

| Location | Time | Description | DSL (d/u) | Cellular (d/u) | 3GOL/DSL (d/u) |
|---|---|---|---|---|---|
| 1 | 1 a.m | Densely populated residential area (city center) | 3.44 / 0.30 Mbps | 4.37 / 1.64 Mbps | 2.27 / 6.46 |
| 2 | 4 p.m | Office area rush hour | 4.51 / 0.47 | 4.56 / 5.18 Mbps | 2.01 / 12.02 |
| 3 | 10 p.m. | Residential Area in Tourist hotspot | 6.72 / 0.84 | 1.92 / 1.53 Mbps | 1.28 / 2.82 |
| 4 | 1 a.m. | Sparsely populated residential (suburbs) | 2.84 / 0.45 | 4.67 / 3.89 Mbps | 2.64 / 9.64 |
| 5 | 2 p.m. | Popular shopping center in peak time | N/A | 5.31 / 2.64 Mbps | N/A |

The results showed that downstream capacity can be augmented by up to 14Mbps in the downlink, and 10Mbps in the uplink. In 4 of 5 locations, these benefits were given through association with 2 different base stations. In the shopping mall, devices connecting to 6 different base stations were found, clearly demonstrating a denser 3G deployment, with load being balanced across the network. Measurements in Location 2 are also taken during peak hours (4pm) but the cellular network seems to be much better provisioned, leading to a linear increase in downlink throughput up to 10 devices.

The behaviour on the uplink was significantly different. For 2 out of the 5 locations, it was observed a clear plateau in aggregation at 5 devices, equal to nearly 5Mbps, which is the capacity for HSUPA (5.76Mbps). For the shopping mall location, even 10 devices are unable to receive the theoretical maximum, possibly due to congestion. Interestingly, though, Location 3 does exceed 5Mbps, and reaching 10Mbps. For that particular location, all 10 devices are primarily using one base station. It is believed that for this particular experiment, while all phones were connected to one base station, they were connected to different sectors, thus going beyond the HSUPA capacity per sector. Such an assumption is plausible since Location 3 is a hub for tourists with a large density of cellular infrastructure.

It will be understood that the invention disclosed and defined herein extends to all alternative combinations of two or more of the individual features mentioned or evident from the text or drawings. All of these different combinations constitute various alternative aspects of the invention.

## Claims

1. A method for sharing wireless broadband connection between devices, comprising a wireless device with a tethering function allowing connection with at least one wired broadband device and sharing their wireless broadband connection through the use of a connecting interface, the method being **characterized in that** said tethering function comprises sharing said wireless broadband connection through aggregating a bandwidth of one wired broadband device to at least one of said wireless broadband connection of said wireless device.

2. A method according to claim 1, comprising performing said bandwidth aggregating by using a middle box capable of providing multi-path support or by using multi-path capabilities on internet protocols.

3. A method according to claim 2, wherein said one wired broadband device is an 802.11 gateway device and said wireless device is at least one of a mobile phone, a laptop, a computer, and/or a tablet computer.

4. A method according to claim 3, wherein it comprises attaching or docking said wireless device to said 802.11 gateway device and performing said wireless broadband connection sharing through said connecting interface by using a wired connectivity.

5. A method according to claim 4, wherein said wired connectivity is made through a USB connection.

6. A method according to claim 3, comprising sharing the wireless broadband connection of the wireless device by using a virtualization equipment.

7. A method according to claim 6, wherein said virtualization equipment is connected to said 802.11 gateway device.

8. A method according to claim 2 or 3, comprising locating said wireless device and said one wired broadband device within a home area so that said bandwidth aggregating takes place inside said home area.

9. A method according to claim 1 or 2, comprising connecting several of said wireless devices to said one wired broadband device.

10. A method according to claim 2, wherein when performing said bandwidth aggregating by using a middle box, comprising downloading a plurality of chunks of a single file in a video streaming protocol.

11. A method according to claim 2, wherein when performing said bandwidth aggregating by using a middle box, comprising downloading a part of the content from a content server by using headers having specific content-ranges.

12. A system for sharing wireless broadband connection between devices, comprising a wireless device having a tethering function and being adapted to allow connection with at least one wired broadband device and sharing their wireless broadband connection through the use of a connecting interface, the system **characterized in that** said tethering function comprises sharing said wireless broadband connection through aggregating a bandwidth of one wired broadband device to at least one of said wireless broadband connection of said wireless device.

13. A system according to claim 12, wherein said one wired broadband device is an 802.11 gateway device having a bus with a plurality of data connections, and said wireless device is connected to said bus with said plurality of data connections.
